# EUROPEAN PATENT SPECIFICATION

(11) **EP 2 023 000 B1**
(45) Date of publication and mention of the grant of the patent: **30.12.2009**
(21) Application number: 08014029.6
(22) Date of filing: 05.08.2008
(51) Int. Cl.: F16D 65/092, F16D 69/04

(54) **Brake pad**
Bremsbelag
Plaquette de frein

(30) Priority: 06.08.2007 JP 2007204099
(43) Date of publication of application: 11.02.2009
(73) Proprietor: Nabtesco Corporation, Tokyo (JP)
(72) Inventor: Asano, Yoshio, Kobe-shi, Hyogo (JP); Yamada, Kohei, Kobe-shi, Hyogo (JP); Eto, Tadashige, Kobe-shi, Hyogo (JP); Akamatsu, Osamu, Kobe-shi, Hyogo (JP); Saito, Makoto, Kobe-shi, Hyogo (JP); Yokoji, Kazuhiko, Kobe-shi, Hyogo (JP)
(74) Representative: Müller-Boré & Partner Patentanwälte

(56) References cited:
- EP-A- 0 902 210
- WO-A-03/098068
- DE-A1- 4 436 457
- DE-U1- 8 514 607
- US-A1- 2003 234 149

## Description

### Background of the Invention

### 1. Field of the Invention

The present invention relates to a brake pad for use in a vehicle.

### 2. Background Art

Generally, in a brake pad for use in a vehicle, for example, as disclosed in Japanese Patent Laid-Open Publication No. 7-158673 and Japanese Patent Laid-Open Publication No. 2004-522118, a friction member is fixedly attached to a reinforcing plate or the like which is mounted to a back plate. More specifically, in a brake pad disclosed in Japanese Patent Laid-Open Publication No. 7-158673, in a state where a friction member is fitted to a reinforcing plate, the friction member is sintered, and the reinforcing plate is fastened to a back plate with a rivet. Meanwhile, in a brake pad disclosed in Japanese Patent Laid-Open Publication No. 2004-522118, a rough base support covered with a rough base is welded to a back plate, and a friction member is pressed onto the rough base support.

The brake pad disclosed in the above Publications includes the reinforcing plate or the rough base support to thereby prevent the friction member from breaking off from the reinforcing plate or the rough base support. However, in the case of using a sintered material having various substances dispersed in a main material as a friction member, because thermal expansion coefficients of the dispersed substances are different from that of the main material, substances are likely to separate from the main material at their respective boundary surfaces due to frictional heat and the like to consequently cause a crack along the boundary surface in an intermediate portion in a thickness direction of the friction member. If such crack appears, in these brake pads, it is difficult to prevent a part of the friction member from breaking off although the friction member is firmly coupled to the reinforcing plate or the rough base support. Specifically, if a crack appears in the friction member along the back plate because the friction member receives a shear force at braking, the crack gradually develops due to continued use of the brake pad, hence causing a fear that a part of the friction member will separate and then break off.

WO 03/098068 A1 discloses a brake lining for the disk brake of a vehicle comprising a carrier plate, friction elements and a spring element allocated to each friction element.

EP 0 902 210 A2 describes a brake pad support for a disk brake pad comprising a bolt for connecting a support plate with the friction member.

### Summary of the Invention

An object of the present invention is to provide a brake pad which can effectively prevent a friction member from breaking off.

A brake pad according to an aspect of the present invention is brake pad to be pressed against a brake disc and comprises: a base member; a friction block including a support member, and a friction member fixedly attached to a surface of the support member, the friction block being mounted to the base member; an elastic member provided between the base member and the friction block for allowing the friction block to tilt and move in a direction of approaching the base member when the friction block is pressed against the brake disc; and a plurality of projections which each project from the surface of the support member to which the friction member is fixedly attached, and each extend to a friction surface of the friction member, and each have a rugged side surface, and the plurality of projections and the friction member being firmly integrated with each other.

### Brief Description of the Drawings

FIG. 1 is a cross-sectional view of a brake pad according to an embodiment of the present invention.
FIG. 2A is a cross-sectional view showing a friction block used in the brake pad.
FIG. 2B is a plan view showing the friction block used in the brake pad.
FIG. 3 is a cross-sectional view of a brake pad according to another embodiment.
FIG. 4A is a cross-sectional view showing a friction block used in the brake pad shown in FIG. 3.
FIG. 4B is a plan view showing the friction block used in the brake pad shown in FIG. 3.

### Detailed Description of the Preferred Embodiments of the Invention

The following will describe a best mode for carrying out the present invention in detail with reference to the drawings.

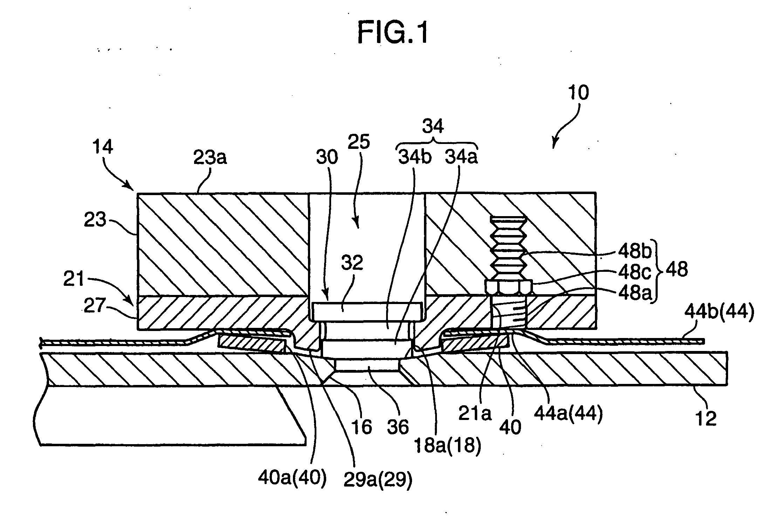

FIG. 1 shows a brake pad according to an embodiment of the present invention. The brake pad 10 according to the present embodiment is used for a disc brake provided in a high-speed rail vehicle. A plurality of brake pads 10 are arranged with respect to a rotational surface of a brake disc (not shown). The brake pad 10 includes a base member 12 and a plurality of friction blocks 14 mounted to the base member 12.

The base member 12 has the shape of an elongated flat plate extending in one direction in plan view. The base member 12 is arranged in parallel with a tangential direction to a rotational circumference of the brake disc. The base member 12 is made of a metal including iron as a main material.

The base member 12 has a plurality of through holes 16 extending therethrough. The through holes 16 are formed at locations on which friction blocks 14 are respectively mounted. The number of through holes 16 is the same as the number of friction blocks 14 to be mounted. Each through hole 16 has an expanded outer opening in an outer portion (lower portion of the base member 12 in FIG. 1) of the base member 12.

The base member 12 is formed with a curved seat 18 having a concave curved surface in the surface (upper surface of the base member 12 in FIG. 1) of the base that faces the friction block 14 and around the through hole 16. The curved seat 18 is formed as a recess having a circular shape in plan view, and a curved surface of the recess is a seat surface 18a. The through hole 16 is at a center of the curved seat 18.

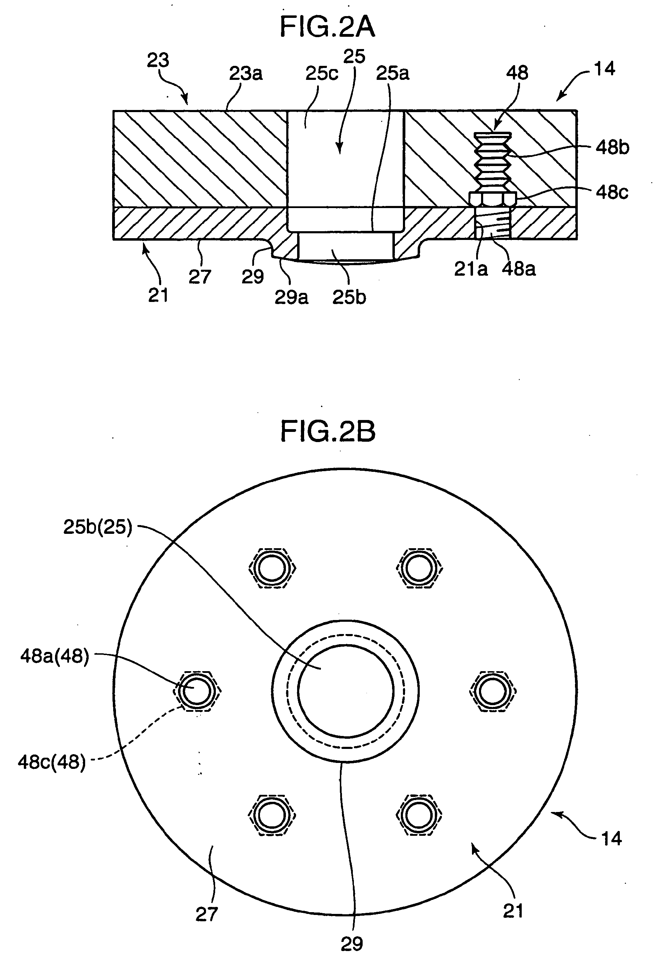

As shown in FIGS. 2A and 2B, the friction block 14 is formed in the shape of a thick disc. The friction block 14 may be formed in the shape of a polygon such as triangle, pentagon, and hexagon. In this case, the vertices of the polygon may be preferably rounded.

The friction block 14 includes a reinforcing plate 21 which serves as a support member, and a friction member 23 which is fixedly attached to the reinforcing plate 21. The friction block 14 has a through hole 25 extending through the reinforcing plate 21 and the friction member 23. The reinforcing plate 21 is made of a metal including iron as a main material. The reinforcing plate 21 includes a main portion 27 in the shape of a circular plate, and an annular portion 29 projecting from the main portion 27. The through hole 25 extends through a center of the main portion 27. The annular portion 29 projects from the main portion 27 around the through hole 25 toward the base member 12. The annular portion 29 faces the curved seat 18.

The annular portion 29 has an end surface (lower surface) 29a which is convexly curved so as to correspond to the seat surface 18a of the concave curved seat 18 of the base member 12. In other words, the end surface 29a of the annular portion 29 agrees with an arc of a circle having a center located on an axis of the annular portion 29. The friction block 14 is mounted in a state that a gap exists between the end surface 29a of the annular portion 29 and the seat surface 18a of the curved seat 18. When the end surface 29a of the annular portion 29 comes into contact with the seat surface 18a of the curved seat 18, the end surface 29a of the annular portion 29 is slidable over the curved seat 18 in this contact state.

The friction member 23 is fixedly attached to the surface (upper surface in FIG. 1) of the reinforcing plate 21 that is remote from the base member 12. The friction member 23 is formed in the shape of a thick disc, and the through hole 25 extends through a center of the friction member 23. The friction member 23 has the same shape as that of the reinforcing plate 21 in plan view.

The friction member 23 is made of a copper alloy including copper as a main material, and small amounts of metals such as iron, metallic compounds, graphite and/or other additives, these elements being dispersed to obtain a high coefficient of friction even at high temperature. The friction member 23 is sintered to be thereby fixedly attached to the reinforcing plate 21. It is noted that the friction member 23 is not limited to a member made of a sintered metal, but may be made of, for example, a material including reinforcement fiber dispersed in a synthetic resin which is a main material.

The friction member 23 has a free end surface (end surface distant from the base member 12 or upper surface in FIG. 1) which serves a friction surface 23a. The friction surface 23a is to be pressed against the brake disc (not shown), and is a contact surface which is to be brought into contact with the brake disc.

The through hole 25 of the friction block 14 has a step which defines a narrow space in the through hole 25 closer to the base member 12. Specifically, the through hole 25 includes a step portion 25a, a small diameter portion 25b, and a large diameter portion 25c. The step portion 25a is formed in the reinforcing plate 21, and located between the small diameter portion 25b and the large diameter portion 25c. The small diameter portion 25b is located closer to the base member 12 with respect to the step portion 25a, and the large diameter portion 25c is located closer to the friction member 23 with respect to the step portion 25a.

The through hole 25 of the friction block 14 faces the through hole 16 of the base member 12. A rivet 30 is inserted in the through hole 16 of the base member 12 and the through hole 25 of the friction block 14 to thereby couple the friction block 14 to the base member 12.

The rivet 30 includes a head 32 for preventing the rivet 30 from moving off, and a main body 34 which has a diameter smaller than that of the head 32. The diameter of the head 32 is smaller than that of the large diameter portion 25c of the through hole 25 of the friction block 14, and larger than that of the small diameter portion 25b. The head 32 has a contact surface coming into contact with a contact surface of the step portion 25a of the through hole 25 of the friction block 14 to thereby prevent the friction block 14 from moving off.

The main body 34 includes a contact portion 34a coming into contact with the base member 12, and an intermediate portion 34b between the head 32 and the contact portion 34a. The intermediate portion 34b has a diameter smaller than the head 32 and the contact portion 34a. In other words, the diameter of the contact portion 34a is larger than that of the intermediate portion 34b.

The contact portion 34a has a diameter smaller than the head 32 and is in contact with the curved seat 18 of the base member 12.

The main body 34 further includes a fastening portion 36 which extends from the contact portion 34a in the through hole 16 of the base member 12. The fastening portion 36 is formed with an expanded part having a larger diameter in the expanded opening of the through hole 16 to thereby sandwich the base member 12 between the expanded part of the fastening portion 36 and the contact portion 34a.

A distance from the contact surface of the head 32 to the contact surface of the contact portion 34a is slightly longer than that from the contact surface of the step portion 25a to the end surface 29a of the annular portion 29. Thus, in the state where the friction block 14 is coupled to the base member 12, there is a slight gap between the end surface 29a of the annular portion 29 and the seat surface 18a of the curved seat 18.

An elastic member 40 is provided between the base member 12 and the friction block 14. The elastic member 40 is a metallic disc spring which has a dish shape, and has an opening 40a. The annular portion 29 is inserted in the opening 40a of the elastic member 40, and the elastic member 40 is located between the base member 12 and the friction block 14.

The elastic member 40 applies an elastic force to the base member 12 and the friction block 14 in a direction of separating the base member 12 and the friction block 14 from each other. The elastic member 40 has an elastic coefficient which allows the elastic member 40 to be elastically deformed when the friction block 14 is pressed against the brake disc to perform braking. Accordingly, the elastic member 40 is elastically deformed by a pressing force transmitted through the friction block 14 when the friction block 14 is pressed against the brake disc, which causes the friction block 14 to be displaced in an up-down direction, or to tilt.

A heat transfer suppressing member 44 is provided between the friction block 14 and the elastic member 40. The heat transfer suppressing member 44 is a plate having substantially the same shape and size as the base member 12 in plan view.

The heat transfer suppressing member 44 is formed with contact portions 44a in sections corresponding to the plurality of friction blocks 14, and extension portion 44b extending between these contact portions 44a. Each contact portion 44a is formed in an annular shape having an inner diameter slightly larger than an outer diameter of the annular portion 29, and an outer diameter slightly larger than an outer circumference of the elastic member 40. The heat transfer suppressing member 44 is arranged in such a way that the annular portion 29 passes through an opening of the contact portion 44a and the contact portion 44a comes in contact with the friction block 14.

The extension portion 44b connects the contact portions 44a with one another, and the extension portion 44b is bent on the outer periphery of the contact portions 44a and extends in substantially parallel with the friction block 14 while keeping a space from the friction block 14.

The heat transfer suppressing member 44 is made of a material having a smaller coefficient of thermal conductivity than the friction block 14. For example, the heat transfer suppressing member 44 is made of a stainless-steel having a smaller coefficient of thermal conductivity than a cast iron which the reinforcing plate 21 is made of.

A plurality of projections 48 (six projections in this embodiment) are provided in the friction block 14. Each projection 48 includes a first portion 48a, a second portion 48b, and a head portion 48c. The first portion 48a is formed with an external thread which is screwed in a threaded hole 21a formed in the main portion 27 of the reinforcing plate 21. In other words, the projection 48 is formed with irregularities in a side surface thereof. The first portion 48a has an end which comes into contact with the contact portion 44a of the heat transfer suppressing member 44 and receives a pushing force of the elastic member 40.

The second portion 48b is formed in the other portion of the projection 48 and extends in one direction. The second portion 48b is formed with wide parts and narrow parts alternately in a longitudinal direction thereof to thereby increase the contact area of the second portion 48b with the friction member 23, and prevent the friction member 23 from separating from the reinforcing plate 21. The second portion 48b may be formed with an external thread as the first portion 48a.

The head portion 48c is located between the first portion 48a and the second portion 48b. In the present embodiment, the head portion 48c is formed in the shape of a hexagon bolt head.

The projection 48 is screwed into the threaded hole 21a of the reinforcing plate 21. In other words, the projection 48 is fastened to the reinforcing plate 21 by a mechanical fastener. The projection 48 is inserted and screwed in the threaded hole 21a from the friction member side, and the head portion 48c of the projection 48 comes into contact with the surface of the reinforcing plate 21 that is in contact with the friction member 23. In other words, the projection 48 is arranged in such a way that the head portion 48c more extending in a radial direction than the first portion 48a projects from the surface of the reinforcing plate 21 that is in contact with the friction member 23.

The projections 48 are arranged in such way that their respective axes are parallel with a direction perpendicular to the friction surface 23a. The projections 48 extend to the friction surface 23a of the friction member 23. Thus, even if a crack occurs in the friction member 23 by a shear force generated at braking, the crack can be prevented from developing further by the provision of the projections 48.

The friction member 23 is fixedly attached to the reinforcing plate 21 after the projections 48 are fastened to the reinforcing plate 21. Specifically, after the projections 48 are mounted to the reinforcing plate 21, the friction member 23 is sinteredly attached to the reinforcing plate 21 and the projections 48. The second portion 48b of the projection 48 is buried in the friction member 23. The projections 48 are kept from loosening off.

In the sintering process where the friction member 23 is fixedly attached to the reinforcing plate 21, the friction member 23 is also firmly integrated with the projections 48. The projections 48 are made of a copper alloy which includes copper as a main material and is similar to the material of the friction member 23. Therefore, in the process where the friction member 23 is sintered, the friction member 23 easily integrates with the projections 48. It is noted that as the friction member 23 is worn away at braking, the projections 48 are similarly worn away at the same time.

There is a possibility that in the brake pad 10 according to the present embodiment, a crack occurs in a friction member 23 by a shear force at braking. However, even in this case, development of the crack is limited to a considerably small extent by the projections 48. Even if the crack develops to an intermediate portion in the friction member 23 and causes the likelihood that the friction member 23 separates into pieces toward the brake disc and the reinforcing plate 21 at the intermediate portion, even a piece of the friction member 23 will be kept from going away because the friction member 23 is firmly integrated with the projection 48 having the irregularities in the side surface thereof. Specifically, the projections 48 each have the irregularities in the side surface thereof, which increases the contact area of the friction member 23 with the projections 48. The irregularities serve to prevent the friction member 23 from moving in a direction of going away. In this way, the integration of the friction member 23 with the projections 48 is high, and the friction member 23 is prevented from partially breaking off or flying apart. In other words, the projections 48 prevent a crack from developing to such a degree that the friction member 23 wholly breaks off or flies apart, and further prevent even a part of the friction member 23 from breaking off or flying apart.

Especially, in the case that the brake pad 10 is applied to a high-speed rail vehicle, it is important to ensure a sufficient coefficient of friction of the friction member 23 at high temperature because the friction member 23 has a high temperature due to frictional heat. The type and amount of additives are determined from this viewpoint. For this reason, there may be a case of using a friction member which does not have a sufficient toughness in a high temperature region. Even in such this case, in the brake pad 10 of the present embodiment, the provision of the projections 48 prevents a crack from developing to such a degree that the friction member 23 wholly breaks off, and further prevents even a part of the friction member 23 from breaking off or flying apart.

In addition, even in the case of selecting a material for the friction member in view of a high-speed rail vehicle and need of a high coefficient of friction, in other words, even in the case where the friction member does not have an insufficient toughness as compared with a material which is selected for the friction member in consideration of a toughness of the friction member, the brake pad 10 of the present embodiment prevents the friction member 23 from breaking off due to development of a crack. This provides a wider selectability of a material for the friction member in aspects of type and amount of additives.

Further, in the present embodiment, since the projections 48 are fixedly attached to the reinforcing plate 21 by the mechanical fastener, even a material unsuitable for connection with the reinforcing plate 21 can be used for the projection 48. This enhances the designability in aspect of material. The projections 48 can be more firmly mounted to the reinforcing plate 21.

Further, in the present embodiment, since each projection 48 is separately formed with the first portion 48a and the second portion 48b, the first portion 48a can be made to have a thread having a shape and a size best suited for the connection with the reinforcing plate 21, and the second portion 48b can be made to have irregularities having a shape and a size best suited for the connection with the friction member 23. Thus, it is easy to satisfy the contrary demands of fastening to the reinforcing plate 21 and integrating with the friction member 23.

In addition, since the second portion 48b located in the friction member 23 have the larger irregularities from the first portion 48a, it is unlikely that the first portion 48a disengages from the thread hole 21a due to vibrations and other causes. Specifically, since the second portion 48b will not engage with the threaded hole 21a of the reinforcing plate 21, the first portion 48a is unlikely to disengage from the thread hole 21a. Accordingly, the projection 48 is reliably prevented from disengaging off. In addition, the larger irregularities of the second portion 48b than the first portion 48a makes the material of the friction member 23 easily reach the cuts of the second portion 48b. Thus, it is possible to satisfy the contrary demands of fastening to the reinforcing plate 21 and integrating with the friction member 23.

Further, in the present embodiment, since the projection 48 and the friction member 23 are made of materials having the same main material, the friction member 23 and the projections 48 are easily integrated with each other in the manufacturing of the brake pad 10. This increases the integration between the friction member 23 and the projections 48, and the friction member 23 is more effectively prevented from breaking off or flying apart.

The projection 48 may be formed to reach the friction surface 23a of the friction member 23.

Further, although the brake pad 10 applied to a high-speed rail vehicle has been described in the present embodiment, the present invention is also applicable to vehicles other than a high-speed rail vehicle.

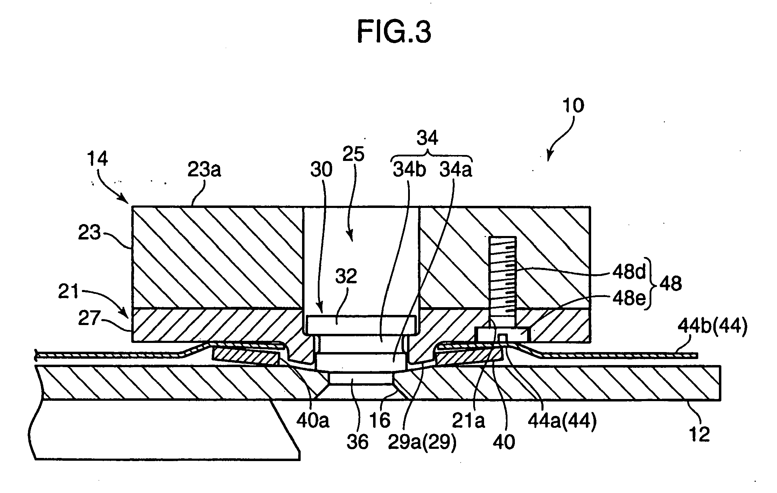

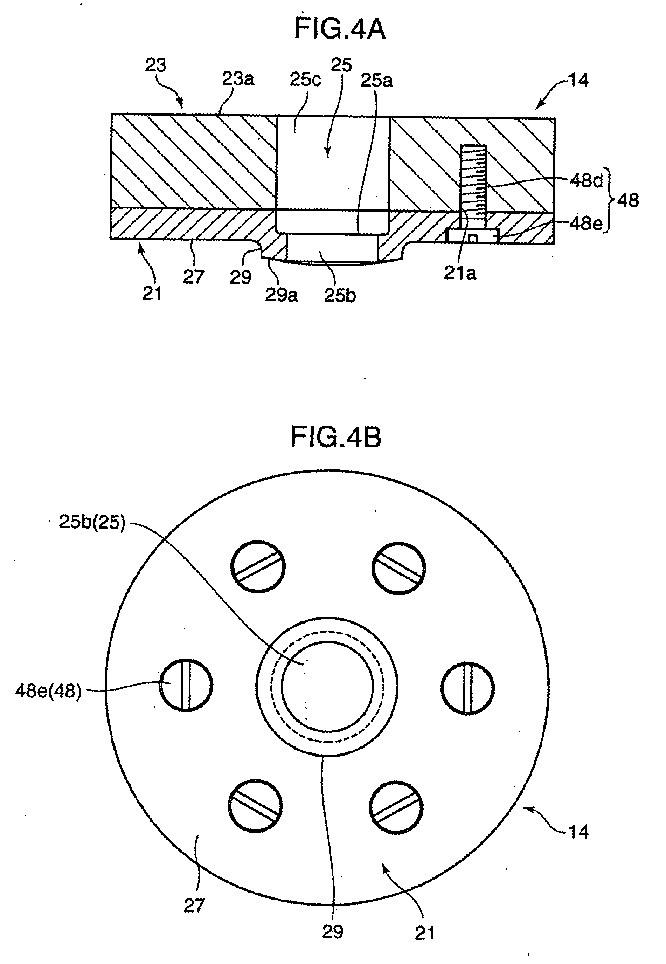

Further, as shown in FIGS. 3, 4A, and 4B, a projection 48 may be constructed by a bolt. In this embodiment, the projection 48 includes a threaded portion 48d and a head portion 48e. A hole 21a which is formed in a reinforcing plate 21 has a small diameter threaded portion and a large diameter portion for receiving the head portion 48e of the projection 48 from a base side. The projection 48 is engaged with the small diameter threaded portion of the hole 21a and the head portion 48e is in the large diameter portion of the hole 21a of the reinforcing plate 21. A friction member 23 is sintered after the projection 48 is screwed into the reinforcing plate 21. Consequently, the friction member 23 is fixedly attached to the reinforcing plate 21 and the threaded portion 48d of the projection 48. Further, the head portion 48e of the projection 48 receives the elastic force of an elastic member 40 through a heat transfer suppressing member 44. The projection 48 is pressed by the pushing force of the elastic member 40. Hence, the projection 48 which is mechanically fastened to the reinforcing plate 21 is prevented from disengaging due to vibrations and other causes. Accordingly, the projection 48 is reliably prevented from breaking off.

In this embodiment, also, each projection 48 may be formed to reach the friction surface 23a of the friction member 23. Further, this embodiment is applicable to vehicles other than a high-speed rail vehicle.

### [Summary of Embodiments]

The above embodiments are summarized as follows.
(1) In the present embodiment, there is a possibility that a crack occurs in the friction member due to a shear force received by the friction member at braking. However, even in this case, the development of the crack is limited to a considerably small range by the projections. The crack is prevented from developing throughout the friction member. Further, even if a crack develops to an extent of causing a likelihood that the friction member separates into pieces toward the brake disc and the support member, the friction member is firmly held by the projections since the friction member is fixedly attached to the projections each having the irregularities in the side surface thereof, and the integration between the friction member and the projections is high. Thus, the friction member is prevented from partially breaking off or flying apart. In other words, the projections prevent a crack from developing to such a degree that the friction member wholly breaks off or flies apart, and prevent the friction member from partially breaking off or flying apart.
(2) The projections may be fixedly attached to the support member by a mechanical fastener.
   In this construction, a material unsuitable for the connection with the support member can be used for the projections. Thus, the degree of freedom of selecting a material in design is improved. Also, the projections are firmly mounted to the support member.
(3) The projections each may include a first portion which is formed with an external thread to be screwed into the support member, and a second portion which is firmly integrated with the friction member.
   In this construction, the first portion and the second portion are separately provided in the projection, the first portion is formed with a thread having a shape and a size best suited for the connection with the support member, and the second portion is made with a shape and a size suitable for integration with the friction member. Thus, it is easy to satisfy the contrary demands of fastening to the support member and integrating with the friction member.
(4) The second portion may be formed with irregularities having a larger cut than the external thread of the first portion.
   In this construction, the pitch of the external thread (the first portion) which is screwed into the support member having a small thickness is shortened. Thus, the projections are more firmly attached to the support member. On the other hand, if the irregularities of the second portion have small cuts, the friction member is hard to enter the cuts of the irregularities due to the short pitch, making it difficult to firmly hold the friction member. However, in this construction, the irregularities of the second portion have larger cuts than the first portion make the material of the friction member easily enter the cuts of the irregularities of the second portion. Therefore, it is possible to satisfy the contrary demands of fastening to the support member and integrating with the friction member.
(5) The projections each may receive a pushing force from the elastic member at an outer end thereof.
   In this construction, since the end of each projection receives the pushing force of the elastic member, the projection mechanically fastened to the support member is prevented from disengaging from the support member due to vibrations and other causes. Accordingly, the projection is reliably prevented from disengaging off.

As described above, according to the present embodiment, the brake pad effectively prevents the friction member from even partially breaking off.

## Claims

1. A brake pad (10) to be pressed against a brake disc, comprising:
a base member (12);
a friction block (14) including a support member (21), and a friction member (23) fixedly attached to a surface of the support member (21), the friction block (14) being mounted to the base member (12);
an elastic member (40) provided between the base member (12) and the friction block (14) for allowing the friction block (14) to tilt and move in a direction of approaching the base member (12) when the friction block (14) is pressed against the brake disc;
**characterized in that**
a plurality of projections (48) which each project from the surface of the support member (21) to which the friction member (23) is fixedly attached, and each extend to a friction surface (23a) of the friction member (23), and each have a rugged side surface, the plurality of projections (48) and the friction member (23) being firmly integrated with each other.

2. The brake pad (10) according to claim 1, wherein the plurality of projections (48) are fixedly attached to the support member (21) by a mechanical fastener.

3. The brake pad (10) according to claim 1 or 2, wherein the plurality of projections (48) each include a first portion (48a) which is formed with an external thread to be screwed into the support member (21), and a second portion (48b) which is firmly integrated with the friction member (23).

4. The brake pad (10) according to claim 3, wherein the second portion (48b) has irregularities having a larger cut than the external thread.

5. The brake pad (10) according to any one of the preceding claims, wherein the plurality of projections (48) each receive a pushing force from the elastic member (40) at an outer end thereof.

## Patentansprüche

1. Bremsbelag (10), der gegen eine Bremsscheibe gepresst werden soll, der umfasst:
ein Basisglied (12);
einen Brems- bzw. Reibungsblock (14) mit einem Halteglied (21) und einem Reibungsglied (23), das fest an einer Oberfläche des Halteglieds (21) angebracht ist, wobei der Reibungsblock (14) an dem Basisglied (12) montiert ist;
ein elastisches Glied (40), das zwischen dem Basisglied (12) und dem Reibungsblock (14) bereitgestellt ist, um zuzulassen, dass der Reibungsblock (14) kippt und sich in eine Annäherungsrichtung zu dem Basisglied (12) bewegt, wenn der Reibungsblock (14) gegen die Bremsscheibe gepresst wird;
**gekennzeichnet durch**
eine Vielzahl von Vorsprüngen (48), die jeweils von der Oberfläche des Halteglieds (21) vorstehen, an dem das Reibungsglied (23) fest angebracht ist, und die sich jeweils zu einer Reibungsoberfläche (23a) des Reibungsglieds (23) erstrecken und jeweils eine raue Seitenfläche haben, wobei die Vielzahl von Vorsprüngen (48) und das Reibungsglied (23) fest miteinander integriert sind.

2. Bremsbelag (10) nach Anspruch 1, wobei die Vielzahl von Vorsprüngen (48) durch ein mechanisches Befestigungsmittel fest an dem Halteglied (21) angebracht ist.

3. Bremsbelag (10) nach Anspruch 1 oder 2, wobei die Vielzahl von Vorsprüngen (48) jeweils einen ersten Abschnitt (48a), der mit einem Außengewinde ausgebildet ist, um in das Halteglied (21) geschraubt zu werden, und einen zweiten Abschnitt (48b) umfasst, der fest mit dem Reibungsglied (23) integriert ist.

4. Bremsbelag (10) nach Anspruch 3, wobei der zweite Abschnitt (48b) Unregelmäßigkeiten mit einem größeren Einschnitt als das Außengewinde hat.

5. Bremsbelag (10) nach einem der vorangehenden Ansprüche, wobei die Vielzahl von Vorsprüngen (48) jeweils an ihren äußeren Enden eine Druckkraft von dem elastischen Element (40) aufnimmt.

## Revendications

1. Plaquette de frein(10) qui doit être pressée contre un disque de frein, comprenant :
un élément de base (12) ;
un bloc de friction (14) qui inclut un élément de support (21) et un élément de friction (23) fixé de manière stationnaire sur une surface de l'élément de support (21), dans lequel le bloc de friction (14) est monté sur l'élément de base (12) ;
un élément élastique (40) prévu entre l'élément de base (12) et le bloc de friction (14) afin de permettre au bloc de friction (14) de s'incliner et de se déplacer dans une direction d'approche de l'élément de base (12) lorsque le bloc de friction (14) est pressé contre le disque de frein ;
**caractérisée en ce que**
une pluralité de projections (48) qui se projettent chacune depuis la surface de l'élément de support (21) sur laquelle l'élément de friction (23) est fixé de manière stationnaire et qui s'étendent chacune vers une surface de friction (23a) de l'élément de friction (23) et qui ont chacune une surface latérale à aspérités, dans laquelle la pluralité de projections (48) et l'élément de friction (23) sont intégrés fermement les unes avec l'autre.

2. Plaquette de frein (10) conformément à la revendication 1, dans laquelle la pluralité de projections (48) est fixée de manière stationnaire sur l'élément de support (21) par un dispositif de fixation mécanique.

3. Plaquette de frein (10) conformément à l'une ou l'autre des revendications 1 et 2, dans laquelle chaque projection parmi la pluralité de projections (48) inclut une première partie (48a) qui est formée avec un filetage externe, lequel doit être vissé dans l'élément de support (21), et une seconde partie (48b) qui est intégrée fermement avec l'élément de friction (23).

4. Plaquette de frein (10) conformément à la revendication 3, dans laquelle la seconde partie (48b) a des irrégularités qui ont une coupe plus grande que le filetage externe.

5. Plaquette, de frein (10) conformément à l'une quelconque des revendications précédentes, dans laquelle chaque projection parmi la pluralité de projections (48) reçoit chacune une force de poussée depuis l'élément élastique (40) sur une extrémité extérieure de celle-ci.
